# EUROPEAN PATENT APPLICATION

(11) **EP 1 602 595 A1**
(43) Date of publication of application: **07.12.2005**
(21) Application number: 05253319.7
(22) Date of filing: 27.05.2005
(51) Int. Cl.: B65D 81/34, A47J 36/28, F24J 1/00

(54) **Self heating or cooling container**

(30) Priority: 27.05.2004 GB 0411919
(71) Applicant: Huhtamaki (UK) Ltd., Gosport, Hampshire PO13 0PR (GB); Tempra Technology, Inc., Bradenton, FL 34203-7754 (US); Uniq Plc, Gerrards Cross, SL9 0UN (GB)
(72) Inventor: Marshall, Neil R. c/o Huhtamaki (UK) Limited, Gosport PO13 0PR (GB); Maskell, Alan c/o Uniq PLC, Gerrards Cross SL9 0UN (GB); Sabin, Cullen M., Bradenton 34233 FL (US); Bolmer, Michael S., Sarasota 34233 FL (US)
(74) Representative: Colmer, Stephen Gary

(57) **Abstract**

A container (101), suitable for the inclusion of at least one product therein, which comprises an integral, activatable, heating (or cooling) system for the product, which container includes a lining, the lining and container defining at least three mutually segregatable zones, these being i) one or more zones in which product may be contained; ii) a zone (115) in which a first kind of chemical reactant may be contained and iii) a zone (116) in which a second kind of chemical reactant may be contained, the container including a rotatable activator (107), for example, an activation knob, located at the exterior of the container, and, rotatably mounted within the container, and operative by rotation of the activator, means (107) for terminating the segregation of ii) and iii) wherein the upper of ii) and iii) is not located so as to impede in service, heat transference from the reactant mass to i) (or vice versa).

## Description

This invention relates to containers. More particularly, this invention relates to containers the contents of which may be heated or cooled.

US 4809673 discloses a heating device which has a disposable tray with an upper compartment which contains a food product and a lower compartment which has two reagents which are separated from each other by one or more watertight partitions and also having one axis with radial blades to tear said watertight partitions and a control knob visible outside of the tray and, moreover, having at least one screen equipped with orifices which are crosswise to said axis.

The present applicants have found, however, difficulties in endeavouring to make the preferred embodiment of that disclosure function efficiently. Specifically, it is found that, in service, the remains of the torn partitions are significant impediments to heat transfer. Moreover, for a variety of reasons, including surface tension and airlock effects, a significant quantity of the reactant fuel remains with the original partition, reducing the heating efficiency of the reaction and also impeding heat transfer. The manner of mixing is also believed to result in local overheating and, in other areas, imperfect heating of the contained product.

This invention seeks to provide an improved container; in particular, one where the above-mentioned disadvantages are obviated or at least reduced.

According to one aspect of this invention, there is provided a container, suitable for the inclusion therein of at least one product to be heated or cooled, including but not limited to comestibles, which comprises an integral, activatable, heating (or cooling) system for the comestibles or other product, which container includes a lining, the lining and container defining at least three mutually segregatable zones, these including i) one or more zones in which comestibles or other products may be contained; ii) a zone in which a first kind of chemical reactant may be contained and iii) a zone in which a second kind of chemical reactant may be contained, the container including a rotatable activator, for example an activation knob, located at the exterior of the container and, rotatably mounted within the container and operative by rotation of the activator, means for terminating the segregation of ii) and iii) wherein the upper of ii) and iii) is not located so as to impede, in service, heat transference from the reactant mass to i) (or vice versa). Preferably, the upper of ii) and iii) is interposed between i) and an exterior surface of the container.

According to another aspect of this invention, there is provided a container, suitable for the inclusion therein of at least one product to be heated or cooled, including but not limited to comestibles, which comprises an integral, activatable, heating (or cooling) system for the comestibles or other product, which container includes a lining, the lining and container defining at least three mutually segregatable zones, these including i) one or more zones in which comestibles or other products may be contained; ii) a zone in which a first kind of chemical reactant may be contained and iii) a zone in which a second kind of chemical reactant may be contained, the container including a rotatable activator, for example an activation knob, located at the exterior of the container and, rotatably mounted within the container and operative by rotation of the activator, means for terminating the segregation of ii) and iii) wherein the segregation of ii) and iii) includes an aperture, suitably pre-formed, closed by a moveable element and the means for terminating the segregation of ii) and iii) moves, e.g. by realignment, that element which, on activation, allows the two kinds of reactant to mix thereby heating or cooling i). Preferably, the aperture opening means comprises a manifold fluidly communicable simultaneously with ii) and iii) and registrable with the aperture by rotation of the activator.

The container can be of any general shape, for example rectangular, round or oval. It is preferred that the container (or, in a generally circular configuration, the outer bowl) is fabricated from a plastics material, preferably by injection moulding. The bowl may be relatively wide-mouthed such as a typical soup bowl or relatively narrow-mouthed such as a cup for soup or coffee. Desirably, the thickness of the container should not exceed 1.0mm and is suitably from 0.3 to 0.7mm, although local thickening may be beneficial. The lining (or in a generally circular configuration, the inner bowl) may be fabricated from plastics material, either by thermoforming or injection moulding; it may also be formed from metal foil, such as aluminium or tin foil, for example by swaging the foil to the desired shape. The metal is preferably coated with plastics material to assist in spot welding and seaming over the container throat. The metal may also be coated with lacquer or plastics material on the side contactable with the comestibles.

In a preferred embodiment of the container, zones ii) and iii) are injection moulded as a unitary structure. In this embodiment, the lining includes zone i).

In a preferred embodiment, at least one of zones ii) and iii), and preferably both zones, are charged with reactant prior to adhering the lining to the container interior, for example by spot welding. Indeed, it is a further aspect of this invention to provide a partial container in which the lining is absent comprising zones ii) and iii) wherein at least one, and preferably both, zones are charged with reactant.

The rotatable activator is grippable by a user. It may be configured, for example, as a knob, lever, handle, key or switch. The activator and cooperating means for terminating the segregation of zones ii) and iii) may also suitably be injection moulded as a unitary structure. This structure is desirably mounted in the container by push-fitting it, at lower temperature, into position in the container while the latter is at elevated temperature.

It is preferred that the zone in which the chemical reactant in liquid form is to be contained is, in service, both above the zone in which the other kind of chemical reactant may be contained and above the means for terminating the segregation of ii) and iii). It is also preferred that iii) is located below i). It is preferred wherein the first kind of chemical reactant is present as a liquid which, in service, is gravity fed into iii).

The two kinds of chemical reactant may, on mixing, produce heat or may produce a cooling effect. Examples of the former are systems in which the first kind of chemical reactant comprises a fuel and the second kind of chemical reactant comprises an oxidant; for example, wherein the fuel comprises a glycol, such as glycerol, and the oxidant comprises a permanganate. Another class of systems which produce heat are those wherein one kind of chemical reactant solvates or hydrolyses the other kind, generating an exotherm. An example is where one kind of reactant is calcium oxide while the other is water. Examples of the latter systems which produce a cooling effect include those wherein one kind of chemical reactant solvates the other but produces a cooling effect. An example is where one kind of reactant is ammonium nitrate while the other is water. At least one kind of chemical reactant may include a diluent.

Without prejudice to the generality of this invention, this will be further described in relation to the first kind of chemical reactant including glycerol with the second kind of chemical reactant including potassium permanganate. The glycerol may be present in aqueous solution. The permanganate may be present as a liquid solution such as a solution of sodium permanganate in water or as a solid, such as potassium permanganate, the latter preferably being embedded in a dissolvable binder as disclosed in, for example US 5 035 230 and US 5 984 953. Preferred oxidants are alkali metal permanganates. If the second chemical reactant is a solid, it may be present loose or bagged or coated on the lower portion of the container.

In certain embodiments utilizing potassium permanganate oxidizer it may be desired to include in the heating formulation a reaction moderator, for example, a non-fuel gelling agent such as is disclosed in United States patent No. 6 116 231, issued 12 September 2000. In embodiments for which the reagents for the exothermic reaction provide rapid heat generation for a fast temperature rise in the product being heated, it may be desirable to include borax or a salt such as sodium borate to moderate or cap the temperature increase, such as is described, for example, in pending patent application PCT/US2005/015793. A capping reagent may be provided in a meltable wax thermally coupled to the product container for release when a selected temperature is reached at the product container.

In a particularly preferred embodiment of the invention, zone ii) may contain aqueous glycerol solution that may include a foam supressant. Part of the lower region of this zone is formed as a hollow cylinder containing an aperture, preferably at its upper surface, permitting when open communication between zone ii) and zone iii). The means for terminating the segregation of zone ii) and zone iii) includes a barrel comprising a hole or slot, push-fit in liquid light manner into the cylinder, the means being attached to the activation knob. In the unactivated state the hole or slot is preferably diametrically opposed to the aperture in the cylinder, the zones thereby being segregated.

In another preferred embodiment of the invention, zone ii) is formed as a circumferential reservoir above zone iii). The hollow cylinder contains two apertures, preferably at its upper surface, one permitting when open communication between the lower region of zone ii) and zone iii) while the other when open permits communication between zone iii) and, via a conduit, the space above zone ii). The means for terminating the segregation of zone ii) and zone iii) includes a barrel configured as two manifolds push-fit in liquid tight manner into the cylinder, the means being attached to the activation knob. In the inactivated state the manifolds close both apertures, the zones thereby being segregated.

It is preferred that the activation knob comprises tamper-evident means to prevent unintended activation. A first tamper-evident means comprises a frangible element preventing rotation of the activator, for example a frangible connection between the upright handle or tab of the knob and the boss of the knob. In order to activate the container this frangible connection has to be broken by pulling down the tab. The action of breaking a frangible element furnishes evidence of tamper. It is also preferred that the container includes a second tamper-evident means effective to prevent counterotation of an at least partly rotated knob. Such second tamper-evident means may include a pawl-rachet system operating on the means for terminating the segregation of zones ii) and iii). Alternatively, at least a part of the leading edge of the slot thereof may be formed as a resilient tine which enters the aperture on activation and prevents counterotation. In a further embodiment of the second tamper-evident means that portion of the frangible element initially preventing rotation of the activator and remaining, on activation, on the boss of the knob interacts with an interfering member on the bowl which prevents counterotation. Desirably, this second tamper-evident means should be operative as soon as the aperture begins to be opened in service.

Once the container is filled in all three zones and is sealed, a third tamper-evident means is preferably provided. Even when the knob or other activator has been rotated, the system will not function properly, and in some cases perhaps not at all, until the seal is removed from the ventable cover for zone ii), thereby permitting the chemical reactant in liquid form to discharge under gravity feed through the aperture into zone iii). The vent is preferably countersunk. Premature activation without removal of the seal at least moderates heat generation, thereby providing a measure of safety. Removal of the seal from the vent of the cover for zone ii) also provides tamper-evident means. It may, on occasion, be desirable to include pressure equalising means between the upper regions of zones ii) and iii); for example, a gas-permeable, liquid-impermeable port, conduit or a notch, between the upper region of zone ii) and iii), thereby preventing the stagnation of the thermally-insulating layer of air immediately below zone i), particularly as it cooperates with the vent of zone ii) described above. While the port could be blocked with a pressure plug, the release pressure would be very low for example 2 psig, so as not to pressurise the containers.

The container may include peripheral, spaced apart strengthening ribs. These ribs may also be hand-held, providing the consumer with some thermal insulation. Likewise, the base of the container may be recessed to avoid thermal conduction into support surfaces. It may, on occasion, be suitable to provide an insulator for the lower region of the container both for comfort of the consumer and thermal efficiency of the heating system. Such insulator may be a sleeve of, for example, corrugated paper board or expanded foam or CPET.

The container and/or lining may be fabricated from a filled or unfilled plastics material with a flow point above 110°C, preferably above 135°C. Retort sterilisation takes the temperature to 125°C. The lining at least should be capable to withstand retort sterilisation. Suitably the container and/or lining are fabricated from a plastics material which comprises a polyolefin or a polyester, for example polypropylene or PET. The lining may, if required, include a contiguous barrier layer, for example EVOH. It is particularly preferred that the lining be thermoformed and the container injection moulded both from polypropylene.

In accordance with a preferred feature of this invention, and to promote consumer confidence, the activation knob and its tamper-evident tab may be formed to function as a traditional gas cooker knob, the tab being, in service, pulled down (thereby rupturing its frangible tamper-evident means); locked into grooves in the knob; and then used to turn the knob.

In accordance with another, preferred feature of the invention, the container includes an external thermochromic region in thermal contact with zone i) which is effective to change colour on heating. This region may appear on the knob (for example, as a spot at the centre of the knob) or it may be located on the foil cover or may be a region for displaying promotional indicia, where the thermochromic region appears as the indicia.

According to a further aspect of this invention, there is provided a filled container which includes comestibles in i). Where the comestible to be included in zone i) is a stable comestible, this comestible may be included in zone i) before this is incorporated in the container. Generally, however, the container comprises zones ii) and iii) into which the chemical reactants are placed and this part-structure is lined; a vent formed in the lining; the lining is then filled and the container sealed.

The filled container may be sealed, the seal also acting as a third tamper-evident means; for example, the seal may comprise paper, card, plastics foil or metal foil. The filled container may also include a push-fit plastics lid and/or may be included in a card sleeve where the seal is a hermetic seal and the comestibles are sterilised, if required.

In accordance with a further aspect of the invention, there is provided a process for the preparation of a filled container according to this invention which process comprises incorporating first and second kinds of chemical reactants in zones ii) and iii), respectively; adhering the lining to the container; forming a vent in the lining over zone ii); filling zone i); and sealing the container. Suitably zone i) is filled prior to adhesion of the lining to the container.

The invention will now be described, by way of example, with reference to the accompanying drawings in which:
Figure 1a represents a side elevation vertical medial cross-section of a first embodiment of the container in an untampered state;
Figure 1b represents a side elevation vertical medial cross-section of a first embodiment of the container in a tampered state;
Figure 2 represents a top perspective elevation of the container shown in Figure 1;
Figure 3 represents a bottom perspective elevation of the container shown in Figure 1;
Figure 4 represents a bottom perspective elevation of the container shown in Figure 1 without the knob;
Figure 5 represents a top perspective elevation of the container shown in Figure 4;
Figure 6 shows detail of Figure 1;
Figure 7 represents a top, rear perspective elevation of the detail of the knob construction;
Figure 8 represents a bottom, front perspective elevation detail of the knob construction; and
Figure 9 represents detail of the rotatable activator showing one embodiment of the second tamper evident means.
Figure 10 represents a front elevation of a second embodiment of the container, complete with affixed paper or plastics shroud;
Figure 11A represents a side elevation of the second embodiment shown in Figure 10 and in the untampered state;
Figure 11B represents a top perspective elevation of the container shown in Figure 11A;
Figure 12A represents a side elevation of the container shown in Figure 10 and in the tampered state;
Figure 12B represents a top perspective elevation of the container shown in Figure 12A;
Figure 13A represents a top perspective elevation of the container in Figure 11A with the shroud, lining, wad, knob, filter and tape all removed;
Figure 13B represents a rear elevation of the container shown in Figure 13A;
Figure 13C represents a top perspective elevation of the lining (not to scale);
Figure 13D represents a top perspective elevation of the shroud (not to scale);
Figure 14 represents a diametric vertical section through the activator knob housing of the container shown in Figure 11 A with the shroud removed;
Figure 15 represents a bottom perspective view of detail of the exploded activator knob housing; and
Figure 16 represents a top perspective elevation of the container with the lining removed.

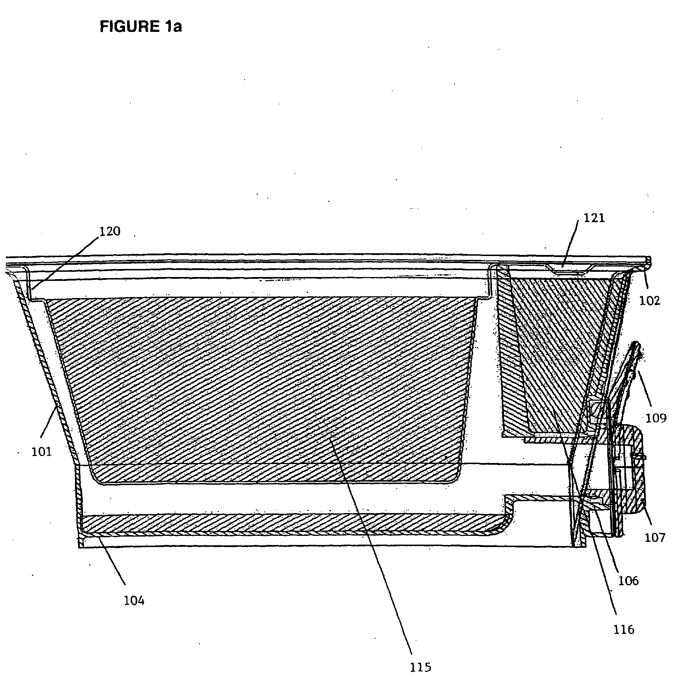

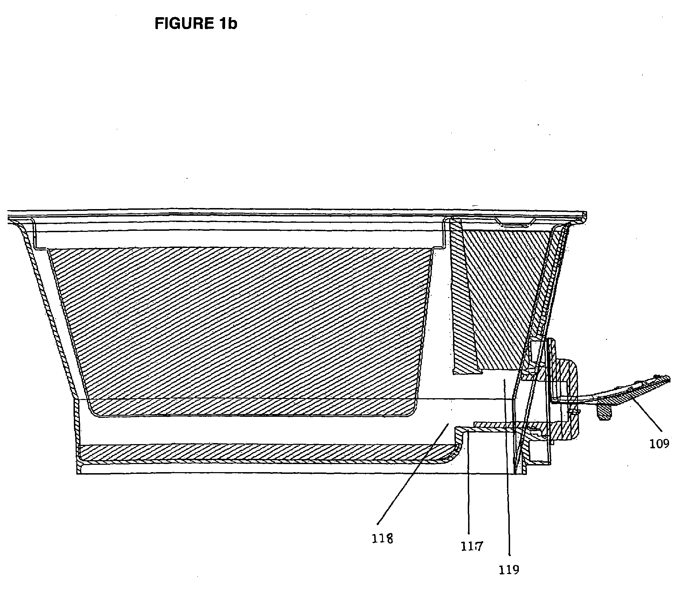

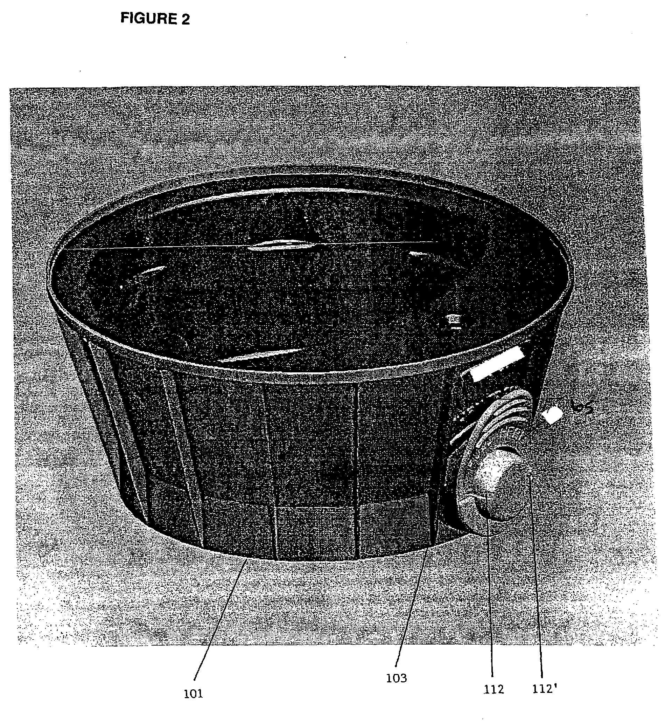

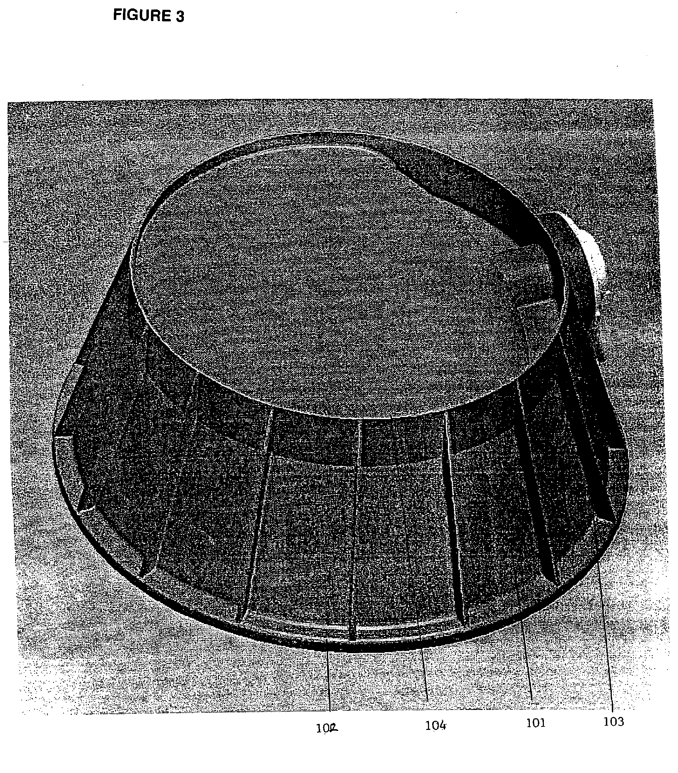

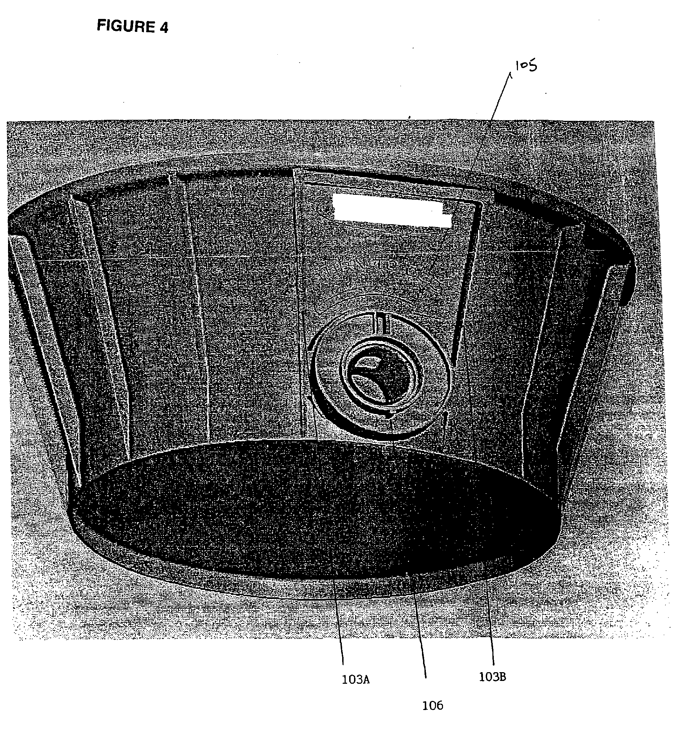

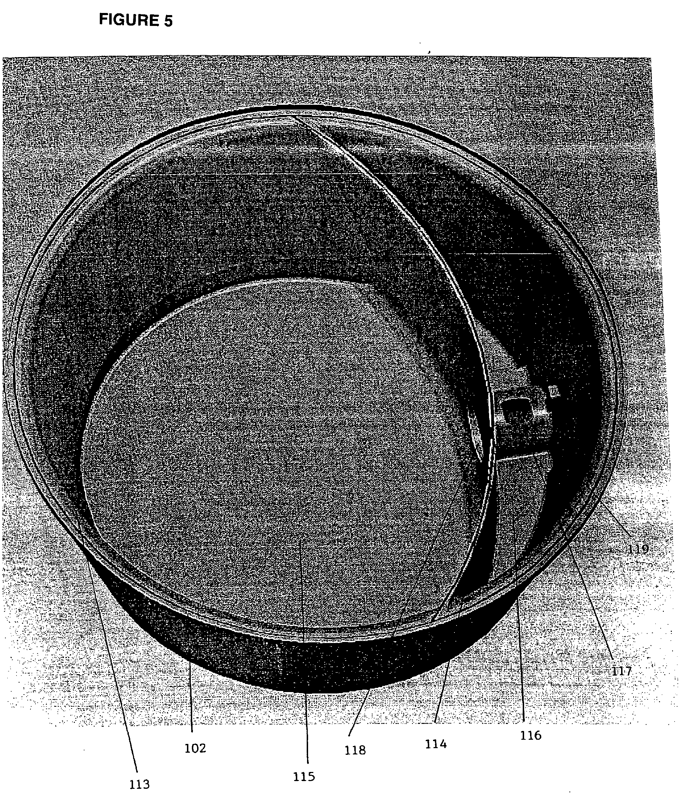

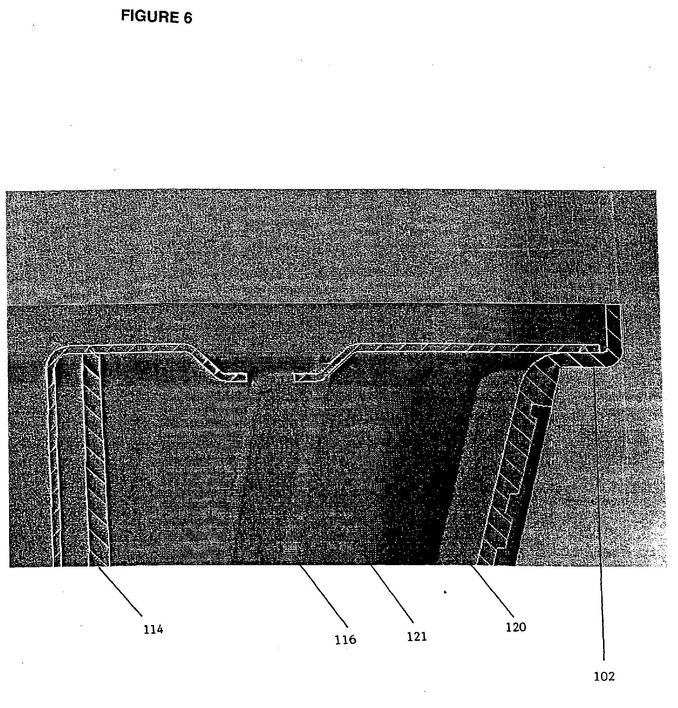

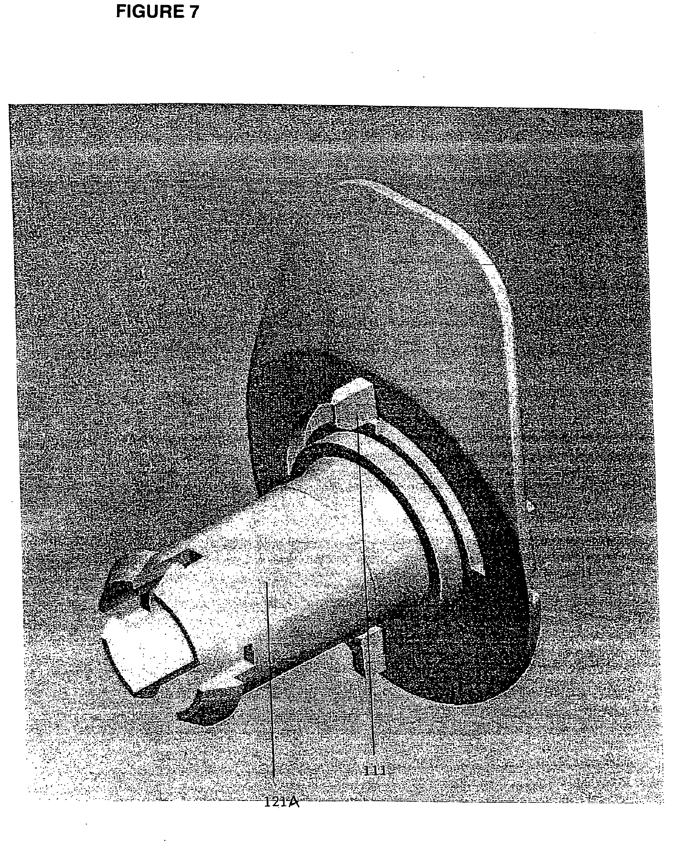

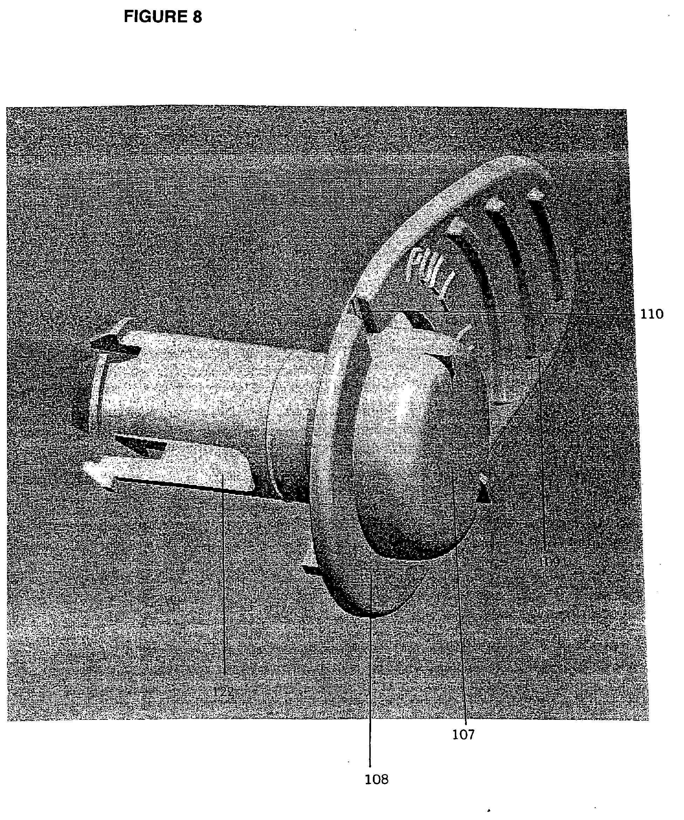

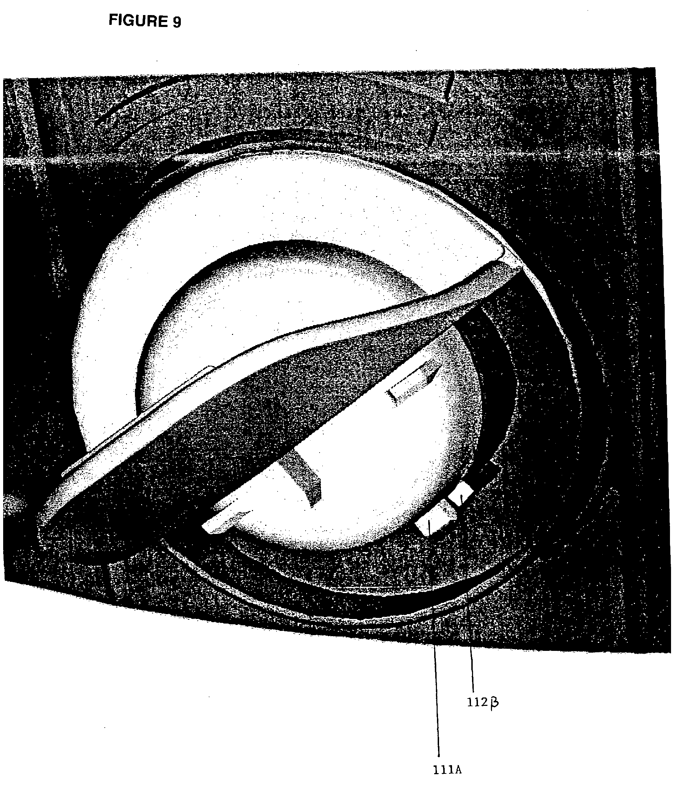

Referring to the drawings at Figures 1 to 9, there is shown a first embodiment of a container (101), for example, a bowl, fabricated from polypropylene and of generally circular configuration preparable by injection moulding techniques. The opening of the container is formed as a lip (102) from which depend a plurality of spaced-apart, integral strengthening ribs (103). The container is formed with a generally tapering depth which is waisted to form a base (104). Between two adjacent ribs (103A, 103B) are instructing indicia (105) and between their lower regions the container is formed as a housing (106) for an activation knob (107) which knob is formed about its lower hemi-circumference with an integral flange (108) which, in turn, extends upwardly into a tamper-evident tab (109) which obscures the indicia. At that diameter where the flange extends into the tab a band of reduced thickness (110) is formed and the tab is, about the upper hemi-circumference of the knob, separate therefrom except for a frangible connection (111). The knob (107) includes a pair of grooves (112, 112') along the diameter of the reduced thickness (110) spaced to receive the tab in a push-fit manner after the frangible connection (111) is broken in use. That portion (111A) of the frangible connection retained on the knob is rotatable, in service, to ride over a chamfered pin (112B) integral with the container and effective to prevent counterotation of the knob. The interior of the container or outer bowl (113) is formed by an integral partition (114) into two zones, a gibbous zone (115) in which a second kind of chemical reactant is incorporated and a crescent zone (116) in which a first kind of chemical reactant is incorporated. Interposed between the partition and the container and forming an integral part of the base of zone (116) is an integral generally cylindrical housing (117) containing a vertical port (118) and a horizontal aperture (119) by which the two zones may be put in fluid communication.

The interior of the container or outer bowl includes a flanged lining or inner bowl (120) which is spot-welded to the lip (102) at a plurality of locations and which includes a vent (121) over the crescent zone. Comestibles (not shown) may be included in the lining and the container may then be sealed with a foil (not shown) and sterilised.

The knob (107) is integrally formed with an axle (121A) which is push-fit in liquid-tight manner into the housing (117). The axle contains a port (122) which, in the untampered state, is out of register with the aperture (119).

In use, the sealing foil (not shown) is removed and the tab (109) is manipulated downwardly to break the frangible connection (111); is located in grooves (112, 112'); and then turned in accordance with the now-displayed instructing indicia (105). This rotates the axle (121) so that the port (122) becomes in register with the aperture (119). This permits the glycerol, as fuel, to access the potassium permanganate, as oxidant. The resulting exotherm is transmitted to the comestible (not shown) housed in the protective lining (120). The comestible content may then be served by removing the sealing foil (not shown) in accordance with the instructing indicia and either decanting the content or consuming it directly from the container.

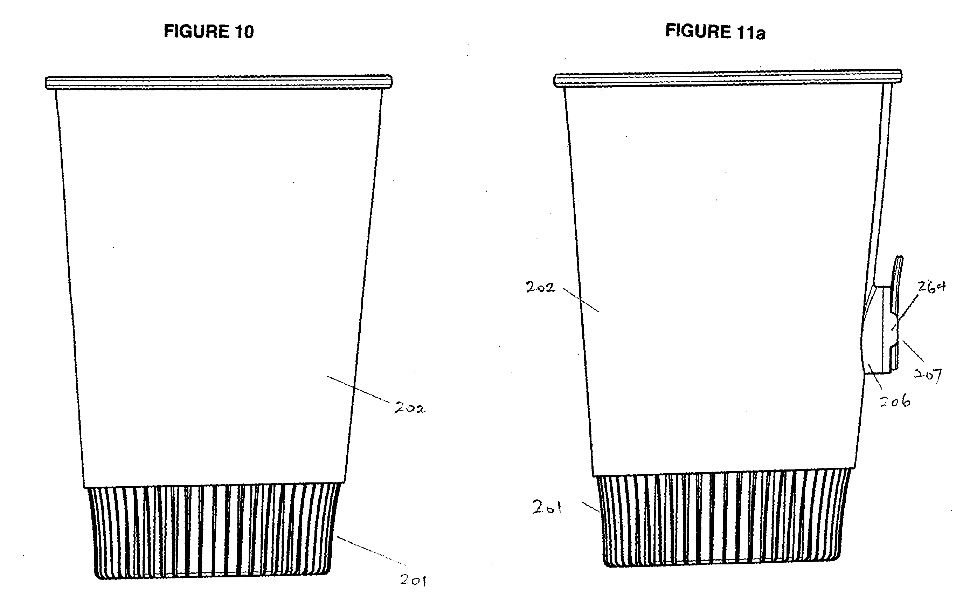

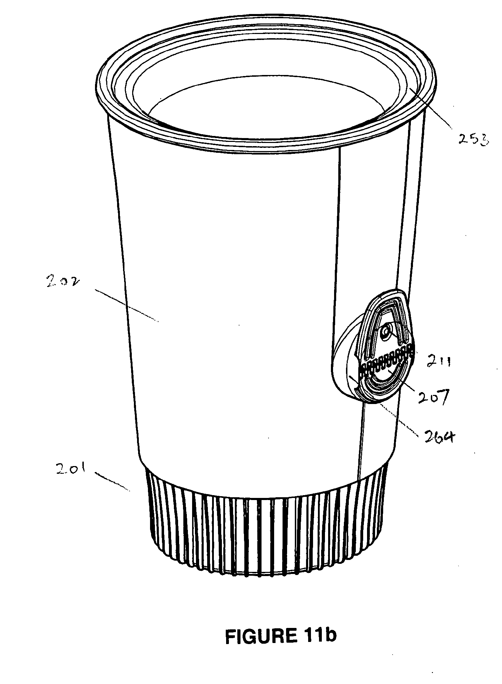

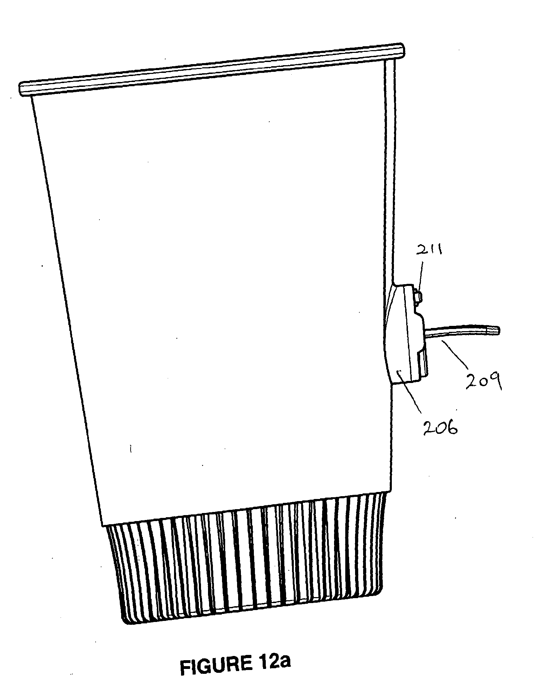

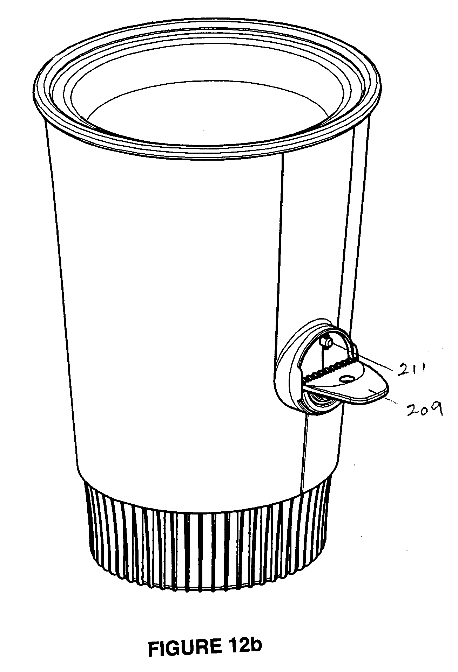

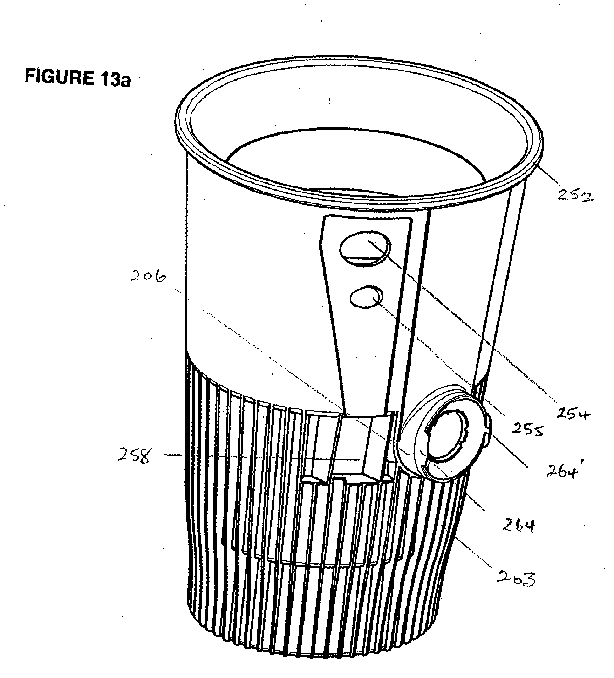

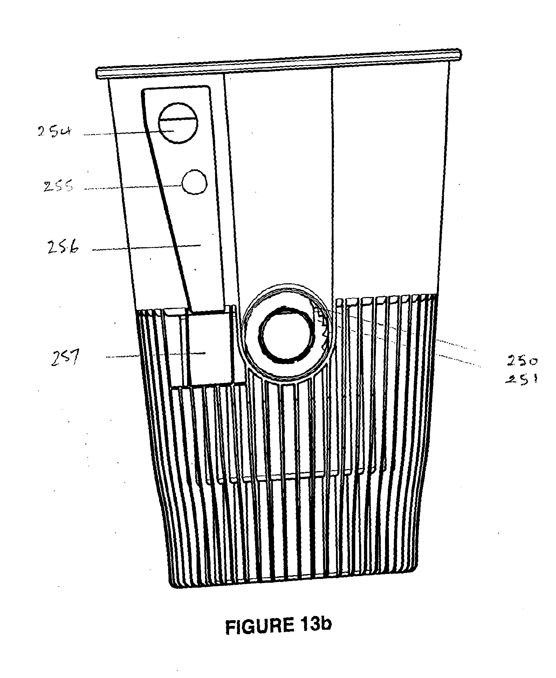

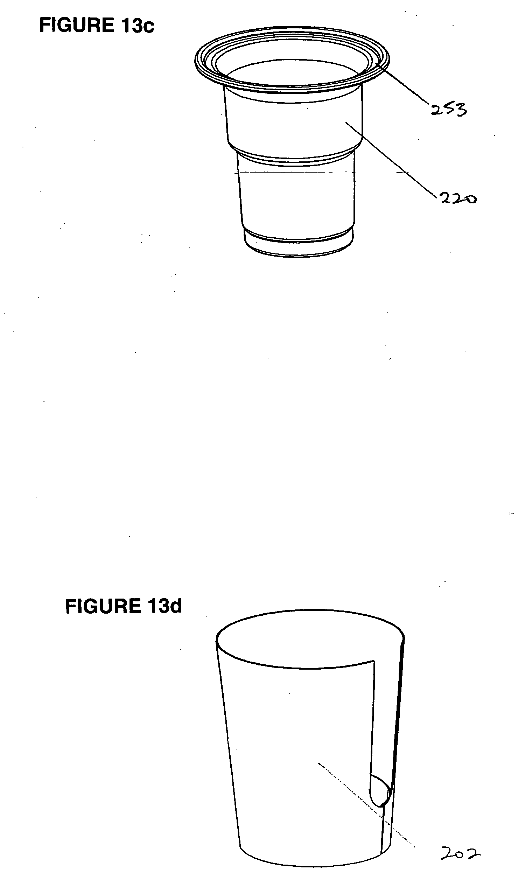

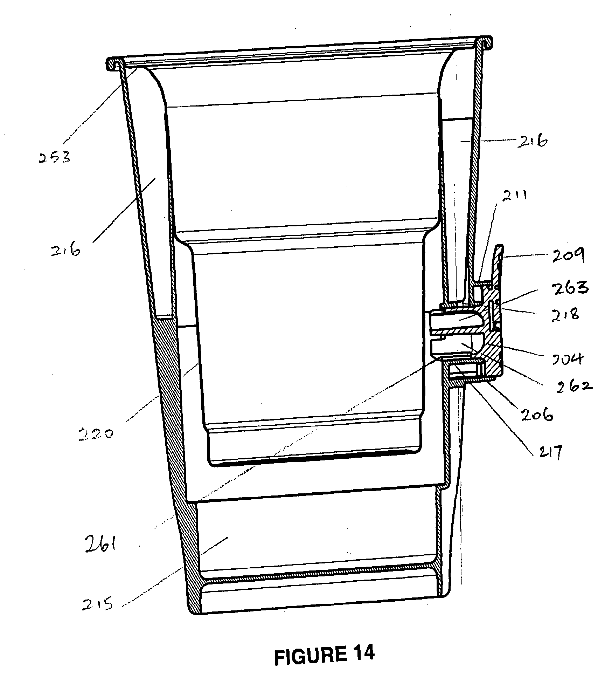

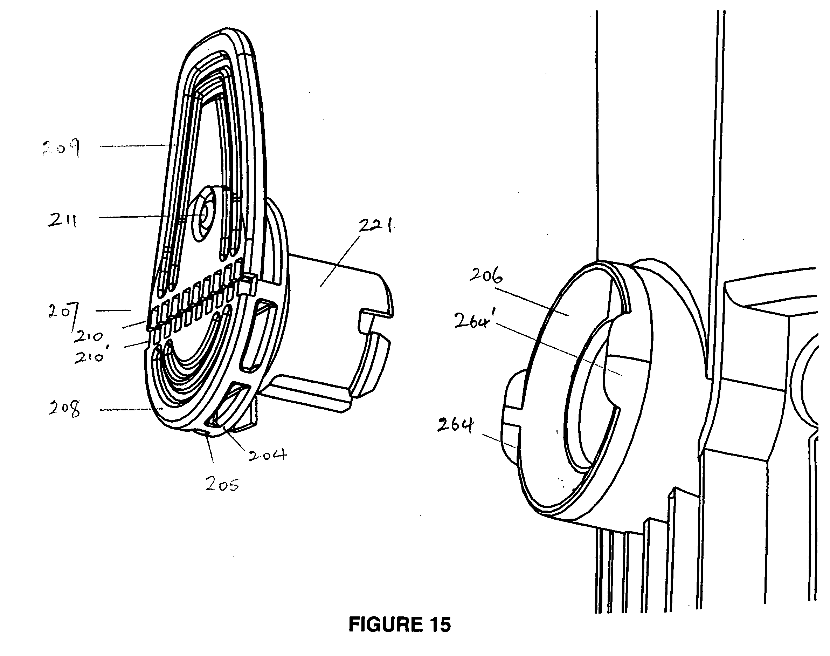

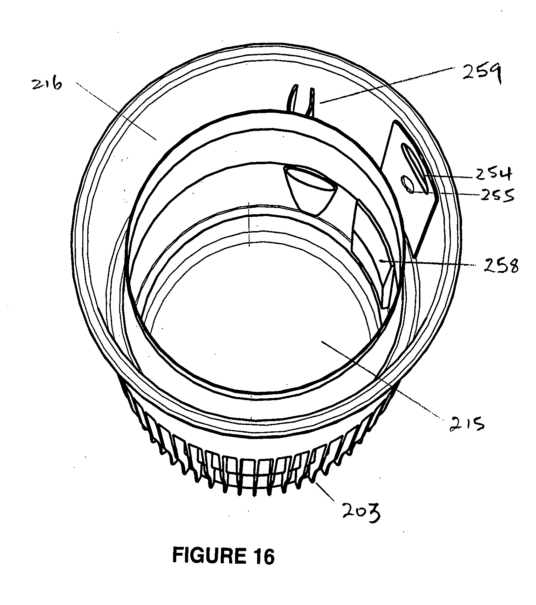

Referring now to the drawings at Figures 10 to 16, there is shown a second embodiment of a container (201), for example a cup, fabricated generally from polypropylene and of generally circular configuration preparable by injection moulding techniques. The container comprises an self-adhesive external, circumferential paper or plastics shroud (202) which may be branded (not shown) for the retailer. The container is optionally formed with a generally tapering depth and, for about its external lower half, with a plurality of radially extending, spaced apart strengthening ribs (203). Located at about the midpoint of its depth, the container is formed as a generally cylindrical housing (206) for an activation knob (207), shown in detail in Figure 15, which knob is formed about its lower hemi-circumference with an integral flange (208) seated on a boss (204) to which it is attached by integral strengthening members (205). The flange (208) extends upwardly into a tamper-evident tab (209), separated from the boss except for a frangible connection (211). At that diameter where the flange extends into the tab a band of reduced thickness is provided bounded by two tongue and groove arrays (210, 210') which are positioned to be in register to receive the tab in a push-fit manner after the frangible connection (211) is broken in use. The barrel of the housing (206) includes a circumferential rachet (250) (shown in part) which cooperates with a pawl (251) integrally mounted from the boss (204) to prevent accidental counterrotation of the knob. The housing (206) further includes two lugs (264, 264') diametrically opposed along the line of arrays (210, 210') in the untampered position and which interfere with the tab (209) to prevent accidental rotation of the knob (207).

The container (201) includes a lip (252) over which a coaxial, flanged lining (220) with a recessed throat (253), of formed metal coated with polypropylene, is seated and to which the lining is spot-welded and seamed over. The lining is push-fitted into the interior surface of a circumferentially located first reservoir (216) inbuilt into the upper wall of the container (201) in which a first kind of reactant, such as aqueous glycerol, may be included. Integral with the container and beneath the lining is a second reservoir (215) in which a second kind of reactant, such as a permanganate salt, may be included.

At an upper point of the exterior surface of the first reservoir (216) there are two vents (254, 255) which fluidly communicate with the reservoir. The upper vent (254) releases vapour (should this be generated by the reactants) and is covered with a filter material (not shown). The lower vent (255) is for fail-safe pressure release and is covered with adhesive tape (not shown). Both vents feed, via a generally triangular trough (256) in the exterior surface of the container to an absorbent wad (257) housed in a generally trapezoidal recess (258) in the container wall.

A portion of the base of the first reservoir (216) is formed as an integral, generally cylindrical housing (217) communicating and coaxial with the housing (206), this being orthogonal to the container axis and the upper region of housing (217) includes a horizontal aperture (218). The first reservoir also includes a convex walled conduit (259) communicating with the upper region of housing (217) and the region above the first reservoir (260) proximate the upper vent (254). The activator knob (207) is integrally formed with an axle (221) which is push-fit in liquid tight manner into the housing (217) retained by flange (261). The interior of the axle is formed as two manifolds (262, 263), the lower one (262), in service, putting the aperture (218) to first reservoir (216) in fluid communication with the second reservoir (215) the upper one (263) simultaneously putting the conduit (259) in fluid communication with the second reservoir (215). However, in the untampered state both manifolds (262, 263) are out of register with the reservoir (216) and conduit (259), respectively.

Reactants (not shown) may be included in the reservoir before the lining is push-fitted into position and spot-welded and seamed over.

Comestibles (not shown) may then be included in the lining and the container may next be sealed across the recessed throat (253) with a foil (not shown) and sterilised.

In use, the consumer removes the sealing foil (not shown) and the tab (209) is manipulated downwardly to break the frangible connection (211); is located in array (210'); and then turned clockwise. This rotates the axle (221) so that the aperture (218) is, via manifold (262), put in fluid communication with the second reservoir (215) thereby permitting the liquid first kind of reactant in the first reservoir (216) to flow under gravity and mix with the second kind of reactant creating an exotherm (or endotherm) to heat (or cool, respectively) the lining (220) and its contents. Simultaneously, manifold (263) is put in fluid communication with the conduit (259) thereby permitting air over the second reservoir (215) to flow into the first reservoir (216) and vent (254), ensuring smooth, controlled mixing of reactant. Where the reactants generate an exotherm any steam evolved in the second reservoir (215) may pass through (256) to the absorbent wad (257). This is masked by the shroud (202) which, together with the inter-rib spacing, provides insulation for the consumer's hand. On completion of the reaction the consumer may drink the heated (or cooled) beverage.

## Claims

1. A container, suitable for the inclusion of at least one product therein, which comprises an integral, activatable, heating (or cooling) system for the product, which container includes a lining, the lining and container defining at least three mutually segregatable zones, these being i) one or more zones in which product may be contained; ii) a zone in which a first kind of chemical reactant may be contained and iii) a zone in which a second kind of chemical reactant may be contained, the container including a rotatable activator, for example, an activation knob, located at the exterior of the container and, rotatably mounted within the container and operative by rotation of the activator, means for terminating the segregation of ii) and iii) wherein the upper of ii) and iii) is not located so as to impede, in service, heat transference from the reactant mass to i) (or vice versa).

2. A container according to Claim 1 wherein the upper of ii) and iii) is interposed between i) and an exterior side surface of the container.

3. A container, suitable for the inclusion of at least one product therein, which comprises an integral, activatable, heating (or cooling) system for the product, which container includes a lining, the lining and container defining at least three mutually segregatable zones, these being i) one or more zones in which product may be contained; ii) a zone in which a first kind of chemical reactant may be contained and iii) a zone in which a second kind of chemical reactant may be contained, the container including a rotatable activator, for example, an activation knob, located at the exterior of the container and, rotatably mounted within the container and operative by rotation of the activator, means for terminating the segregation of ii) and iii) wherein the segregation of ii) and iii) includes an aperture closed by a moveable element and the means for terminating the segregation of ii) and iii) moves, e.g. by realignment, that element which, on activation, allows the two kinds of reactant to mix thereby heating or cooling i).

4. A container according to Claim 3 wherein the aperture opening means comprises a manifold fluidly communicable simultaneously with ii) and iii) and registrable with the aperture by rotation of the activator.

5. A container according to any one of the preceding claims, wherein the activation knob comprises tamper-evident means.

6. A container according to Claim 5 which includes a first tamper-evident means which comprises a frangible connection between a tab of the activation knob and the boss of the knob.

7. A container according to any one of the preceding claims which includes a second tamper-evident means effective to prevent counterotation of an at least partly rotated activation knob.

8. A container according to any one of the preceding claims wherein the first kind of chemical reactant comprises a fuel and the second kind of chemical reactant comprises an oxidant.

9. A container according to Claim 8 wherein the fuel comprises a glycol, for example glycerol, and the oxidant comprises a permanganate.

10. A container according to Claim 8 or 9 wherein at least one kind of chemical reactant includes a diluent.

11. A container according to any one of the preceding claims wherein, in service, iii) is located below i).

12. A container according to any one of Claims 8 to 11 wherein the first kind of chemical reactant is present as a liquid which, in service, is gravity fed into iii).

13. A container according to any one of the preceding claims wherein pressure equalising means is included between the upper regions of zones ii) and iii).

14. A container according to any one of the preceding claims wherein the container and/or the lining is injection moulded as a unitary structure.

15. A container according to any one of the preceding claims which has a generally circular configuration.

16. A container according to any one of the preceding claims which includes peripherical, spaced apart strengthening ribs.

17. A container according to any one of the preceding claims wherein the container and/or lining are fabricated from a filled or unfilled plastics material with a flow point above 110°C, preferably above 135°C.

18. A container according to any one of the preceding claims wherein the container and/or lining are fabricated from a plastics material which comprises a polyolefin or a polyester, for example polypropylene or CPET.

19. A container according to any one of the preceding claims wherein the lining includes a contiguous barrier layer, for example EVOH.

20. A container according to Claim 18 or Claim 19 wherein the container is injection moulded and the lining is thermoformed from, or includes, polypropylene.

21. A container according to any one of the preceding claims which includes an external thermochromic region in thermal contact with zone i) which is effective to change colour on heating.

22. A container according to any one of the preceding claims wherein at least one of ii) and iii) is charged with reactant prior to adhering the lining to the container interior, for example by spot welding.

23. A filled container according to any one of the preceding claims which includes comestibles in i).

24. A filled container according to Claim 23 which is sealed, the seal also acting as a third tamper-evident means.

25. A filled container according to Claim 23 or Claim 24 wherein the seal comprises paper, card, plastics foil or metal foil.

26. A filled container according to Claim 25 which also includes a push-fit plastics lid.

27. A filled container according to any one of Claims 24 to 26 wherein the seal is a hermetic seal and the comestibles are sterilised, if required.

28. A filled or unfilled container substantially as herein described and with reference to the accompanying drawings.

29. A process for the preparation of a filled container according to Claim 23 which process comprises incorporating first and second kinds of chemical reactants in zones ii) and iii), respectively; adhering the lining to the container; forming a vent in the lining over zone ii); filling zone i); and sealing the container.

30. A process according to Claim 29 wherein zone i) is filled prior to adhesion of the lining to the container.

31. A process for the preparation of a filled container substantially as herein described and with reference to the accompanying drawings.

32. A container element as defined in Claim 22 in which the lining is absent.
